# EUROPEAN PATENT APPLICATION

(11) **EP 4 741 672 A1**
(43) Date of publication of application: **13.05.2026**
(21) Application number: 24887509.8
(22) Date of filing: 05.08.2024
(51) Int. Cl.: F16C 11/04, H05K 5/02

(54) **ROTATING SHAFT MECHANISM AND ELECTRONIC DEVICE**

(30) Priority: 06.11.2023 CN 202311468979
(71) Applicant: Honor Device Co., Ltd., Shenzhen, Guangdong 518040 (CN)
(72) Inventor: ZHANG, Yaolei, Shenzhen, Guangdong 518040 (CN); LI, Qiancheng, Shenzhen, Guangdong 518040 (CN); LU, Yilin, Shenzhen, Guangdong 518040 (CN); LI, Houcun, Shenzhen, Guangdong 518040 (CN); YAN, Bin, Shenzhen, Guangdong 518040 (CN)
(74) Representative: MERH-IP Matias Erny Reichl Hoffmann Patentanwälte PartG mbB
(86) International application number: PCT/CN2024/109913
(87) International publication number: WO 2025/097887

(57) **Abstract**

This application provides a hinge mechanism and an electronic device, and relates to the technical field of electronic products, to ensure structural strength of a connecting portion between a swing arm and a hinge base while satisfying a demand for overall thinning of the device. The hinge mechanism includes a hinge base and a first swing arm. The hinge base includes a first mating portion, a second mating portion, and a third mating portion sequentially disposed along an extension direction of a hinge axis. A front side surface of the first mating portion is a first concave arc surface, a rear side surface of the second mating portion is a first convex arc surface, and a front side surface of the third mating portion is a second concave arc surface. The first swing arm includes a fourth mating portion, a fifth mating portion, and a sixth mating portion, the fourth mating portion is located on a front side of the first mating portion, the fifth mating portion is located on a rear side of the second mating portion, and the sixth mating portion is located on a front side of the third mating portion. The fourth mating portion, the fifth mating portion, and the sixth mating portion are slidable respectively along the first concave arc surface, the first convex arc surface, and the second concave arc surface, so that the first swing arm is rotatable relative to the hinge base around the hinge axis.

## Description

This application claims priority to Chinese Patent Application No. 202311468979.0, filed with the China National Intellectual Property Administration on November 6, 2023 and entitled "HINGE MECHANISM AND ELECTRONIC DEVICE", which is incorporated herein by reference in its entirety.

### TECHNICAL FIELD

This application relates to the technical field of electronic products, and in particular, to a hinge mechanism and an electronic device.

### BACKGROUND

In an electronic device such as a foldable mobile phone, a notebook computer, or a watch, a hinge mechanism is disposed to implement a rotatable connection between two adjacent portions.

In the hinge mechanism, structural strength of a connecting portion between a swing arm and a hinge base affects overall structural strength of the device. As the electronic device becomes thinner, a design thickness of the hinge base gradually decreases, and a thickness of a sliding groove in the hinge base for mating with the swing arm also decreases accordingly. Consequently, a thickness of a sliding member on the swing arm for mating with the sliding groove also becomes increasingly thin, resulting in a progressive reduction in the structural strength of the connecting portion and a higher risk of fracture. Therefore, in the related art, the electronic device generally cannot ensure the structural strength of the connecting portion between the swing arm and the hinge base in the hinge mechanism while satisfying a demand for overall thinning of the device.

### SUMMARY

This application provides a hinge mechanism and an electronic device, which can ensure structural strength of a connecting portion between a swing arm and a hinge base in the hinge mechanism while satisfying a demand for overall thinning of the device.

To achieve the foregoing objective, the following technical solutions are used in embodiments of this application.

According to a first aspect, a hinge mechanism is provided. The hinge mechanism includes a hinge base and a first swing arm.

The hinge base includes a first mating portion, a second mating portion, and a third mating portion sequentially disposed along an extension direction of a hinge axis. A front side surface of the first mating portion is a first concave arc surface, a rear side surface of the second mating portion is a first convex arc surface, and a front side surface of the third mating portion is a second concave arc surface. A center line of the first concave arc surface, a center line of the first convex arc surface, and a center line of the second concave arc surface are collinear with the hinge axis.

The first swing arm includes a rotation end, where the rotation end includes a fourth mating portion, a fifth mating portion, and a sixth mating portion. The fourth mating portion is located on a front side of the first mating portion, the fifth mating portion is located on a rear side of the second mating portion, and the sixth mating portion is located on a front side of the third mating portion. The fourth mating portion, the fifth mating portion, and the sixth mating portion are slidable respectively along the first concave arc surface, the first convex arc surface, and the second concave arc surface, so that the first swing arm is rotatable relative to the hinge base around the hinge axis between an unfolded position and a folded position.

In this way, the first concave arc surface, the first convex arc surface, and the second concave arc surface form a virtual sliding groove, where the first convex arc surface forms an upper arc surface of the virtual sliding groove, and the first concave arc surface and the second concave arc surface form a lower arc surface of the virtual sliding groove. The rotation end is disposed within the virtual sliding groove, and is slidable along the virtual sliding groove relative to the hinge base, to implement rotation between the unfolded position and the folded position.

Based on this, the first concave arc surface, the first convex arc surface, and the second concave arc surface are also staggered along the extension direction of the hinge axis. The fourth mating portion is not limited by the upper arc surface, allowing for a larger thickness. The fifth mating portion is not limited by the lower arc surface, allowing for a larger thickness. The sixth mating portion is not limited by the upper arc surface, allowing for a larger thickness. Therefore, a thickness of the rotation end can be increased, thereby improving structural strength of the rotation end, ensuring connection strength between the rotation end and the hinge base, and preventing fracture.

In addition, a spacing between the first convex arc surface and the first concave arc surface in a radial direction of the first concave arc surface and a spacing between the first convex arc surface and the second concave arc surface in a radial direction of the second concave arc surface can be designed to be smaller, so that a height of the hinge base can be reduced, thereby facilitating thinning of the electronic device.

Moreover, contact surfaces between the rotation end and the hinge base are staggered along the extension direction of the hinge axis. On the premise that dimensions of the hinge base along the extension direction of the hinge axis are fixed, areas of the contact surfaces between the rotation end and the hinge base are smaller, resulting in lower friction, which can prevent jamming, thereby improving rotational flexibility.

A radius of the first concave arc surface and a radius of the second concave arc surface may be greater than a radius of the first convex arc surface, less than a radius of the first convex arc surface, or equal to a radius of the first convex arc surface.

Optionally, a rear side surface of the fourth mating portion is a second convex arc surface, and the second convex arc surface is in mating contact with the first concave arc surface. A front side surface of the fifth mating portion is a third concave arc surface, and the third concave arc surface is in mating contact with the first convex arc surface. A rear side surface of the sixth mating portion is a third convex arc surface, and the third convex arc surface is in mating contact with the second concave arc surface. In this way, when the first swing arm rotates relative to the hinge base between the unfolded position and the folded position, the second convex arc surface slides relative to the first concave arc surface, the third concave arc surface slides relative to the first convex arc surface, and the third convex arc surface slides relative to the second concave arc surface. In this way, during sliding, maintaining contact between surfaces can reduce stress concentration and prevent jamming or the like.

Optionally, the radius of the first concave arc surface is equal to the radius of the second concave arc surface. In this way, the hinge base has a simple profile, which facilitates machining.

Optionally, the hinge base further includes a first limiting portion. At least part of the first limiting portion is disposed on a front side of the fourth mating portion. A rear side surface of the first limiting portion is a fourth convex arc surface, and a front side surface of the fourth mating portion is a fourth concave arc surface. Both a center line of the fourth convex arc surface and a center line of the fourth concave arc surface are collinear with the hinge axis, and the fourth convex arc surface and the fourth concave arc surface face each other. In this way, the first limiting portion separates the fourth mating portion from a foldable screen, preventing friction, wear, and noise generated by a contact motion between the fourth mating portion and the foldable screen. In addition, because the fourth convex arc surface of the first limiting portion faces the fourth concave arc surface of the fourth mating portion, and both the center line of the fourth convex arc surface and the center line of the fourth concave arc surface are collinear with the hinge base, interference with the sliding motion of the first limiting portion and the fourth mating portion along the first concave arc surface can be prevented, and structural compactness can be improved.

Optionally, the fourth convex arc surface and the fourth concave arc surface are spaced apart. In this way, the fourth convex arc surface is not in contact with the fourth concave arc surface, so that a contact area between the fourth mating portion and the hinge base can be reduced, sliding friction is reduced, wear is reduced, the service life is prolonged, the likelihood of jamming is lowered, and the folding feel is improved.

Optionally, the hinge base further includes a second limiting portion, and at least part of the second limiting portion is disposed on a rear side of the fifth mating portion. A front side surface of the second limiting portion is a fifth concave arc surface, a rear side surface of the fifth mating portion is a fifth convex arc surface, a center line of the fifth concave arc surface and a center line of the fifth convex arc surface are collinear with the hinge axis, and the fifth concave arc surface and the fifth convex arc surface face each other.

The second limiting portion may shield and protect the fifth mating portion, preventing the fifth mating portion from being exposed on the rear side of the hinge base, thereby ensuring overall aesthetic appearance of the device. This eliminates the need for a separate hinge cover on the rear side of the hinge base. Therefore, structural complexity can be simplified, and a thickness of the electronic device can be reduced, thereby facilitating thinning. In addition, because the fifth convex arc surface of the fifth mating portion faces the fifth concave arc surface of the second limiting portion, and both the center line of the fifth convex arc surface and the center line of the fifth concave arc surface are collinear with the hinge axis. Therefore, interference with the sliding motion of the second limiting portion and the fifth mating portion along the first convex arc surface can be prevented, and structural compactness can be improved.

Optionally, the fifth concave arc surface and the fifth convex arc surface are spaced apart. In this way, the fifth convex arc surface is not in contact with the fifth concave arc surface, so that a contact area between the fifth mating portion and the hinge base can be reduced, sliding friction is reduced, wear is reduced, the service life is prolonged, the likelihood of jamming is lowered, and the folding feel is improved.

Optionally, the hinge base further includes a fixing portion, and the first mating portion, the second mating portion, and the third mating portion are disposed on the same side of the fixing portion. The first swing arm further includes a swing arm body, and the rotation end is disposed on one end of the swing arm body. When the first swing arm is in the unfolded position, the swing arm body and the fixing portion are respectively located on opposite sides of the rotation end. The structure is simple and the layout is proper.

Optionally, a width of the swing arm body along the extension direction of the hinge axis is less than a spacing between the first mating portion and the third mating portion along the extension direction of the hinge axis. An end portion of the first mating portion away from the fixing portion is a first end portion, and an end portion of the third mating portion away from the fixing portion is a second end portion. When the first swing arm is in the unfolded position, the swing arm body is located between the first end portion and the second end portion.

In this way, thickness overlap between the swing arm body and the first mating portion as well as the third mating portion when the first swing arm is in the unfolded position can be prevented, thereby helping reduce a thickness of the hinge base. In addition, heights set for the first end portion and the second end portion can be increased, and an overlap width between the fourth mating portion and the first concave arc surface and an overlap width between the sixth mating portion and the second concave arc surface can be increased, preventing jamming. Moreover, because the swing arm body is located between the first end portion and the second end portion, that is, the first end portion and the second end portion are respectively located on opposite sides of the swing arm body. In this way, the first end portion and the second end portion can be connected to another part of the hinge base, preventing local protrusions. Therefore, when the first swing arm is in the unfolded position, flatness of the front side surface of the hinge mechanism can be improved, and reliability of the hinge mechanism during a ball drop impact test and a pointed impact test can be improved.

Optionally, the hinge base is provided with at least one clearance hole, and the at least one clearance hole penetrates through a front side surface of the hinge base. When the first swing arm is in the unfolded position, an end portion of the fourth mating portion away from the swing arm body, an end portion of the fifth mating portion away from the swing arm body, and an end portion of the sixth mating portion away from the swing arm body are accommodated within the at least one clearance hole. By using the at least one clearance hole, a clearance can be provided for the end portion of the fourth mating portion away from the swing arm body, the end portion of the fifth mating portion away from the swing arm body, and the end portion of the sixth mating portion away from the swing arm body, so that thickness overlap can be avoided, and the thickness of the hinge base can be reduced, thereby facilitating thinning of the electronic device.

Optionally, the hinge base further includes a first connecting portion, and the first connecting portion is connected between the second mating portion and the fixing portion. The end portion of the fifth mating portion away from the swing arm body is a third end portion, and the third end portion is provided with a clearance notch. When the first swing arm is in the unfolded position, the first connecting portion is accommodated within the clearance notch. In this way, the second mating portion is fixed to the fixing portion by using the first connecting portion, so that the second mating portion can be prevented from being suspended, thereby improving structural strength.

Optionally, an inner wall surface of the clearance notch away from the third end portion is a first stop surface. When the first swing arm is in the unfolded position, the first stop surface is in contact with a rear side surface of the first connecting portion. In this way, with the mating between first stop surface and the rear side surface of the first connecting portion, the first swing arm when in the unfolded position can be stopped.

Optionally, an end surface of the second limiting portion away from the fixing portion is a second stop surface. When the first swing arm is in the unfolded position, the second stop surface is in contact with a rear side surface of the swing arm body. In this way, with the mating between the second stop surface and the rear side surface of the swing arm body, the first swing arm when in the unfolded position can be further stopped.

Optionally, the at least one clearance hole includes a first clearance hole and a second clearance hole that are spaced apart. An arrangement direction of the first clearance hole and the second clearance hole is parallel to the extension direction of the hinge axis, and the first clearance hole and the second clearance hole are respectively located on opposite sides of the first connecting portion. When the first swing arm is in the unfolded position, the end portion of the fourth mating portion away from the swing arm body is accommodated within the first clearance hole, and the end portion of the sixth mating portion away from the swing arm body is accommodated within the second clearance hole. The layout is proper, and the structure is simple.

Optionally, a width of the clearance notch along the extension direction of the hinge axis is less than a width of the fifth mating portion along the extension direction of the hinge axis. Part of the fifth mating portion between the fourth mating portion and the clearance notch is a first sub-portion, and part of the fifth mating portion between the sixth mating portion and the clearance notch is a second sub-portion. When the first swing arm is in the unfolded position, an end portion of the first sub-portion away from the swing arm body is accommodated within the first clearance hole, and an end portion of the second sub-portion away from the swing arm body is accommodated within the second clearance hole. In this way, a contact area between the fifth mating portion and the first convex arc surface can be increased by using the first sub-portion and the second sub-portion, to avoid stress concentration. In addition, thickness overlap between the base and the first sub-portion as well as the second sub-portion can be avoided by using the first clearance hole and the second clearance hole, so that the thickness of the base can be reduced, thereby facilitating overall thinning of the device.

Optionally, the rotation end further includes a second connecting portion, and the second connecting portion is disposed between the fourth mating portion and the fifth mating portion. In this way, a distance between the fourth mating portion and the fifth mating portion in the extension direction of the hinge axis can be increased by using the second connecting portion, thereby improving the structural strength of the rotation end.

Optionally, the rotation end further includes a first support portion, the first support portion is disposed between the fourth mating portion and the second connecting portion, an end portion of the first support portion away from the swing arm body is a first support end, and a rear side surface of the first support end is provided with a first stop protrusion. The hinge base further includes a second support portion, the second support portion is located on a rear side of the first support portion, the second support portion is disposed between the first mating portion and the third mating portion, an end portion of the second support portion away from the fixing portion is a second support end, and a front side surface of the second support end is provided with a second stop protrusion. When the first swing arm is in the folded position, the first stop protrusion is located on a side of the second stop protrusion facing the fixing portion, and is in contact with the second stop protrusion. In this way, the first swing arm can be limited when in the folded position, preventing the first swing arm from detaching away from the hinge base, thereby ensuring connection stability.

Optionally, the hinge base is provided with an accommodating groove, and the accommodating groove penetrates through a front side surface of the hinge base. At least one of the fourth mating portion, the first support portion, or the second connecting portion is accommodated within the accommodating groove. The structure is simple, and the structural strength of the rotation end is large, so that connection strength between the first swing arm and the hinge base can be improved.

Optionally, the hinge base includes an upper base and a lower base located on a rear side of the upper base. The upper base is fixedly connected to the lower base. The second mating portion constitutes part of the upper base, and the first mating portion and the third mating portion constitute part of the lower base. In this way, the lower base and the upper base can clamp the rotation end respectively from a front side and a rear side, so that assembly difficulty between the hinge base and the rotation end can be reduced, thereby improving assembly efficiency.

According to a second aspect, an electronic device is provided. The electronic device includes a first structural member and the hinge mechanism according to any one of the foregoing technical solutions, and a first swing arm of the hinge mechanism is in transmission connection with the first structural member.

The electronic device provided in this application includes the hinge base according to any one of the foregoing technical solutions. Therefore, the electronic device and the hinge base can resolve the same technical problem and achieve the same effect.

Optionally, the electronic device further includes a foldable screen, where the foldable screen includes a first display region and a second display region. The first structural member carries the first display region, the hinge mechanism carries the second display region, and the second display region is located on a front side of the hinge mechanism.

### BRIEF DESCRIPTION OF DRAWINGS

FIG. 1 is a three-dimensional view of an electronic device in an unfolded state according to some embodiments of this application;
FIG. 2 is a schematic diagram of a partial exploded structure of the electronic device shown in FIG. 1;
FIG. 3 is a schematic structural diagram of the electronic device shown in FIG. 1 in a folded state;
FIG. 4 is an assembly diagram of a main mid-frame, a secondary mid-frame, a hinge mechanism, and a foldable screen inside an electronic device in an unfolded state according to some embodiments of this application;
FIG. 5 is a partial enlarged view of region I of the electronic device shown in FIG. 4;
FIG. 6 is a schematic structural diagram of the electronic device shown in FIG. 5 when a first swing arm is in a folded position;
FIG. 7 is a three-dimensional view of a hinge mechanism according to some embodiments of this application;
FIG. 8 is a schematic diagram of an exploded structure of the hinge mechanism shown in FIG. 7;
FIG. 9 is a three-dimensional cross-sectional view of the hinge mechanism shown in FIG. 7 along line A-A when a first swing arm is in a folded position;
FIG. 10 is a three-dimensional cross-sectional view of the hinge mechanism shown in FIG. 7 along line B-B when a first swing arm is in a folded position;
FIG. 11 is a three-dimensional view of a first swing arm in the hinge mechanism shown in FIG. 8 from an angle;
FIG. 12 is a three-dimensional view of the first swing arm shown in FIG. 11 from another angle;
FIG. 13 is a bottom view of an upper base in the hinge mechanism shown in FIG. 8;
FIG. 14 is a three-dimensional view of a lower base in the hinge mechanism shown in FIG. 8;
FIG. 15 is a three-dimensional cross-sectional view of the hinge mechanism shown in FIG. 7 along line C-C;
FIG. 16 is a three-dimensional cross-sectional view of the hinge mechanism shown in FIG. 7 along line D-D when a first swing arm is in a folded position;
FIG. 17 is a three-dimensional view of a hinge mechanism according to some other embodiments of this application; and
FIG. 18 is a three-dimensional view of a hinge mechanism according to some other embodiments of this application.

### DESCRIPTION OF EMBODIMENTS

In embodiments of this application, the terms "first", "second", "third", "fourth", "fifth", and "sixth" are used merely for the purpose of description, and shall not be construed as indicating or implying relative importance or implying a quantity of indicated technical features. Therefore, features defining "first", "second", "third", "fourth", "fifth", and "sixth" may explicitly or implicitly include one or more such features.

In the embodiments of this application, terms "include", "comprise", and any variants thereof are intended to cover a non-exclusive inclusion. Therefore, in the context of a process, method, object, or apparatus that includes a series of elements, the process, method, object, or apparatus not only includes such elements, but also includes other elements not specified expressly, or may include inherent elements of the process, method, object, or apparatus. Without more limitations, elements defined by a sentence "including one ..." does not exclude that there are still other same elements in the process, method, object, or apparatus.

In this embodiment of this application, unless otherwise specified, the description "collinear" indicates approximately collinear within an allowable error range, and the error range may be a range in which a deviation relative to absolute collinearity is less than 2 mm.

This application provides an electronic device. The electronic device may be a user equipment (user equipment, UE), a terminal (terminal), or the like. For example, the electronic device may be a mobile terminal or a stationary terminal, such as a tablet computer (portable android device, PAD), a laptop computer, a watch, a personal digital assistant (personal digital assistant, PDA), a handheld device having a wireless communication function, a computing device, a vehicle-mounted device, a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in smart grid (smart grid), a wireless terminal in transportation safety (transportation safety), a wireless terminal in a smart city (smart city), or a wireless terminal in a smart home (smart home).

The electronic device includes a first structural member, a second structural member, and a hinge mechanism. It should be noted that, in addition to the first structural member, the second structural member, and the hinge mechanism, the electronic device may further include another structure. This is not specifically limited herein.

The hinge mechanism is connected between the first structural member and the second structural member, and is configured to enable the first structural member to rotate relative to the second structural member, so that the electronic device can switch between an unfolded state and a folded state.

The unfolded state refers to a state of the electronic device when an included angle between the first structural member and the second structural member is at a maximum angle. Correspondingly, the folded state refers to a state of the electronic device when the included angle between the first structural member and the second structural member is at a minimum angle.

The following embodiments are exemplarily described based on the electronic device being a foldable screen device. Specifically, the foldable screen device may be exemplarily described based on the foldable screen device being a handheld device having a wireless communication function, and the handheld device having a wireless communication function may be, for example, a mobile phone.

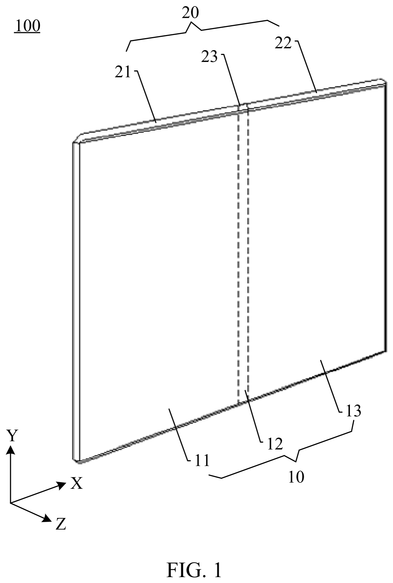

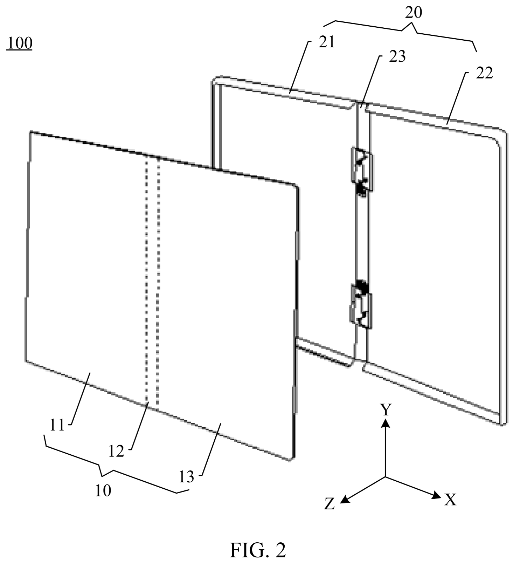

Referring to FIG. 1 and FIG. 2, FIG. 1 is a three-dimensional view of an electronic device 100 in an unfolded state according to some embodiments of this application, and FIG. 2 is a schematic diagram of a partial exploded structure of the electronic device 100 shown in FIG. 1. The electronic device 100 in the unfolded state is approximately in a shape of a rectangular tablet. To facilitate the description of the following embodiments, an XYZ coordinate system is established for the electronic device 100 in the unfolded state. A length direction of the electronic device 100 is defined as an X-axis direction, a width direction of the electronic device 100 is defined as a Y-axis direction, and a thickness direction of the electronic device 100 is defined as a Z-axis direction. It may be understood that, the coordinate system of the electronic device 100 may be flexibly set based on an actual requirement. This is not specifically limited herein. In some other embodiments, the electronic device 10 in the unfolded state may also be in a shape of a square tablet, a circular tablet, an elliptical tablet, or the like.

The electronic device 100 includes a foldable screen 10 and a support apparatus 20.

The foldable screen 10 is configured to display information such as images and videos. The foldable screen 10 may be an organic light-emitting diode (organic light-emitting diode, OLED) screen, a micro organic light-emitting diode (micro organic light-emitting diode) screen, a quantum dot light emitting diode (quantum dot light emitting diode, QLED) screen, a liquid crystal display (liquid crystal display, LCD), or the like.

The foldable screen 10 has a display region configured to display image information. The display region of the foldable screen 10 is exposed to present information such as images or videos to a user. The foldable screen 10 includes a first display region 11, a second display region 12, and a third display region 13. The second display region 12 is connected between the first display region 11 and the third display region 13. In the electronic device 100 shown in FIG. 1, the foldable screen 10 is in the unfolded state, and the first display region 11, the second display region 12, and the third display region 13 are sequentially arranged along an X-axis direction. In this way, the electronic device 100 is folded along a transverse direction. In some other embodiments, when the foldable screen 10 is in the unfolded state, the first display region 11, the second display region 12, and the third display region 13 may also be sequentially arranged along the Y-axis direction. In this way, the electronic device 100 is folded along a longitudinal direction. When the foldable screen 10 is in the unfolded state, a large-screen display can be achieved, to provide richer information for the user and bring a better use experience to the user.

At least the second display region 12 of the foldable screen 10 is of a flexible screen structure. In this way, the second display region 12 may undergo bending deformation under an external force, so that the foldable screen 10 is folded from the unfolded state shown in FIG. 1 to the folded state. The first display region 11 and the third display region 13 of the foldable screen 10 each may be of a flexible screen structure, a rigid screen structure, or partially a flexible screen structure and partially a rigid screen structure. This is not specifically limited herein.

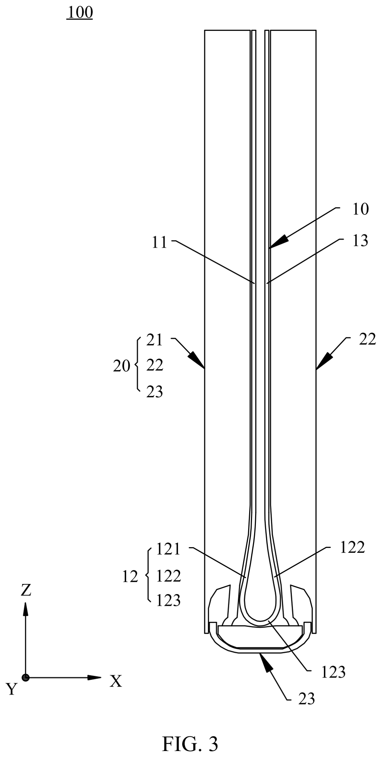

Referring to FIG. 3, FIG. 3 is a schematic structural diagram of the electronic device 100 shown in FIG. 1 in a folded state. The foldable screen 10 in the electronic device 100 is also in the folded state. Specifically, when the foldable screen 10 is in the folded state, the first display region 11 and the third display region 13 of the foldable screen 10 are approximately parallel and opposite to each other. It should be noted that, an angle between the first display region 11 and the third display region 13 is within 30°, and the first display region 11 and the third display region 13 may be considered approximately parallel. That the first display region 11 and the third display region 13 are opposite refers to that a display surface of the first display region 11 and a display surface of the third display region 13 face each other.

When the foldable screen 10 is in the folded state, still referring to FIG. 3, the second display region 12 is folded into a water drop shape, in which the second display region 12 includes an arc section 123, a first transition section 121, and a second transition section 122. The first transition section 121 is connected between the arc section 123 and the first display region 11. The second transition section 122 is connected between the arc section 123 and the third display region 13. A distance between an end of the first transition section 121 connected to the first display region 11 and an end of the second transition section 122 connected to the third display region 13 is a third distance, and a distance between an end of the first transition section 121 connected to the arc section 123 and an end of the second transition section 122 connected to the arc section 123 is a fourth distance, where the fourth distance is greater than the third distance. It may be understood that, when the electronic device is in the folded state, the second display region 12 of the foldable screen 10 may also be folded into another shape based on an actual requirement. This is not limited in this application.

When the electronic device 100 is in the folded state, still referring to FIG. 3, the support apparatus 20 is disposed outside the foldable screen 10 for protection, and the foldable screen 10 is invisible to the user, so that the foldable screen 10 can be prevented from being scratched by a hard object. The electronic device is an inwardly foldable electronic device, and the size of the electronic device 100 is reduced, thereby facilitating portability.

The support apparatus 20 is configured to carry the foldable screen 10. The support apparatus 20 includes a first housing (that is, a first structural member) 21, a second housing (that is, a second structural member) 22, and a hinge mechanism 23. The first housing 21 carries the first display region 11, and the second housing 22 carries the third display region 13. The hinge mechanism 23 is connected between the first housing 21 and the second housing 22, and carries the second display region 12. The hinge mechanism 23 is configured to implement rotation between the second housing 22 and the first housing 21, to support folding of the foldable screen 10 between the unfolded state and the folded state, so that the electronic device 100 can switch between the unfolded state and the folded state.

When the electronic device is a foldable screen device, the unfolded state may be a state of the electronic device 100 when an included angle between the first housing 21 and the second housing 22 is approximately 180°, and the folded state may be a state of the electronic device 100 when an included angle between the first housing 21 and the second housing 22 is approximately 0°. When the electronic device is another device, an included angle between the first structural member and the second structural member in the unfolded state and the folded state may alternatively be another angle. This is not specifically limited in this application.

In the foregoing embodiments, optionally, the first housing 21 may include a mid-frame and a back cover that are connected together, the first display region 11 of the foldable screen 10 is carried on the mid-frame of the first housing 21, the back cover is located on a side of the mid-frame away from the first display region 11, and the back cover may be replaced with a display screen (for example, an LCD display screen). An accommodating cavity is formed between the mid-frame and the back cover, and the accommodating cavity is configured to accommodate electronic components such as a mainboard, a camera module, and a battery. Based on this, the first housing 21 may be connected to the hinge mechanism 23 by using the mid-frame, or may be connected to the hinge mechanism 23 by using the back cover. The following embodiments are described by using an example in which the first housing 21 is connected to the hinge mechanism 23 by using the mid-frame.

Similarly, the second housing 22 may also include a mid-frame and a back cover that are connected together. The third display region 13 of the foldable screen 10 is carried on the mid-frame of the second housing 22, the back cover is located on a side of the mid-frame away from the third display region 13, and the back cover may also be replaced with a display screen (for example, an LCD display screen). An accommodating cavity is formed between the mid-frame and the back cover, and the accommodating cavity is configured to accommodate electronic components such as a sub-board, a speaker module, an antenna element, and a battery. Based on this, the second housing 22 may be connected to the hinge mechanism 23 by using the mid-frame, or may be connected to the hinge mechanism 23 by using the back cover. The following embodiments are described by using an example in which the second housing 22 is connected to the hinge mechanism 23 by using the mid-frame.

It should be noted that, to distinguish the mid-frame of the first housing 21 from the mid-frame of the second housing 22, in the description of the following embodiments, the mid-frame of the first housing 21 is referred to as a main mid-frame, with a reference numeral A in the figures, and the mid-frame of the second housing 22 is referred to as a secondary mid-frame, with a reference numeral B in the figures.

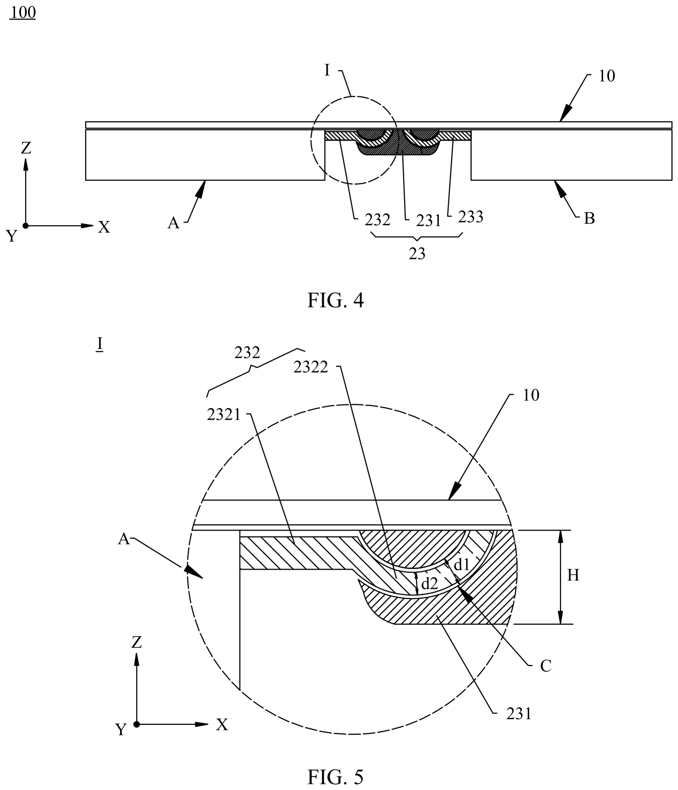

Referring to FIG. 4, FIG. 4 is an assembly diagram of a main mid-frame A, a secondary mid-frame B, a hinge mechanism 23, and a foldable screen 10 inside an electronic device 100 in an unfolded state according to some embodiments of this application. The hinge mechanism 23 includes a hinge base 231, a first swing arm 232, and a second swing arm 233. In FIG. 4, the hinge mechanism 23 is sectioned along an XZ plane at the first swing arm 232 and the second swing arm 233.

The hinge base 231 provides a position reference datum in the hinge mechanism 23. The main mid-frame A may be rotatably connected to the hinge base 231 by using the first swing arm 232. Specifically, the main mid-frame A may be in transmission connection with the first swing arm 232, and the first swing arm 232 may be rotatably connected to the hinge base 231.

The "transmission connection" described in this embodiment and the following embodiments refers to a connection in which motion of one of two connected components can be transmitted to the other. A connection manner between the two components may be a fixed connection, or may include, but is not limited to, at least one of a rotational connection, a sliding connection, a gear meshing transmission connection, a chain-sprocket transmission connection, or a cam mechanism transmission connection.

Similarly, the secondary mid-frame B may be rotatably connected to the hinge base 231 by using the second swing arm 233. Specifically, the secondary mid-frame B is in transmission connection with the second swing arm 233, and the second swing arm 233 may be rotatably connected to the hinge base 231.

The main mid-frame A and the secondary mid-frame B are respectively rotatable relative to the hinge base 231 by using the first swing arm 232 and the second swing arm 233, so that the electronic device 100 moves between an unfolded state and a folded state. When the electronic device 100 is in the unfolded state, the first swing arm 232, the main mid-frame A, the second swing arm 233, and the secondary mid-frame B are all in an unfolded position. When the electronic device 100 is in the folded state, the first swing arm 232, the main mid-frame A, the second swing arm 233, and the secondary mid-frame B are all in a folded position.

In some embodiments, a connection manner between the main mid-frame A, the first swing arm 232, and the hinge base 231 may be the same as a connection manner between the secondary mid-frame B, the second swing arm 233, and the hinge base 231. In this way, structural complexity and assembly difficulty can be reduced.

Certainly, in other embodiments, the connection manner between the main mid-frame A, the first swing arm 232, and the hinge base 231 may also be different from the connection manner between the secondary mid-frame B, the second swing arm 233, and the hinge base 231. The following embodiments are exemplarily described based on a connection manner between the main mid-frame A, the first swing arm 232, and the hinge base 231 being the same as a connection manner between the secondary mid-frame B, the second swing arm 233, and the hinge base 231.

Based on this, the following mainly describes the connection manner between the main mid-frame A, the first swing arm 232, and the hinge base 231. The connection manner between the secondary mid-frame B, the second swing arm 233, and the hinge base 231 may be implemented with reference to the connection manner between the main mid-frame A, the first swing arm 232, and the hinge base 231. This is not described in detail in this application.

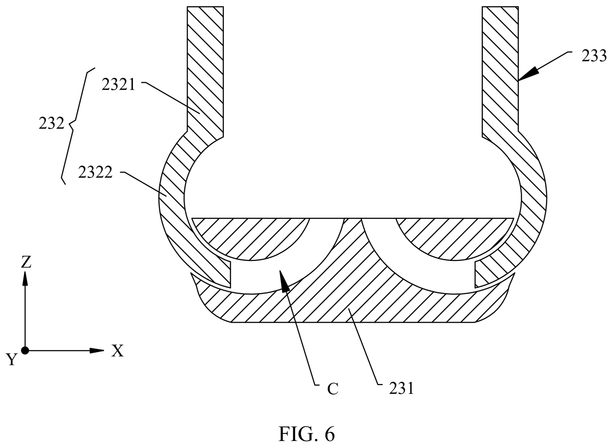

Referring to FIG. 5, FIG. 5 is a partial enlarged view of region I of the electronic device 100 shown in FIG. 4. An arc-shaped sliding groove C is provided on the hinge base 231. The first swing arm 232 includes a swing arm body 2321 and a rotation end 2322 connected to one end of the swing arm body 2321. The rotation end 2322 is accommodated within the arc-shaped sliding groove C, and is slidable along the arc-shaped sliding groove C, so that the first swing arm 232 is rotatable relative to the hinge base 231 between the unfolded position and the folded position. In FIG. 5, the first swing arm 232 is in the unfolded position. Referring to FIG. 6, FIG. 6 is a schematic structural diagram of the electronic device 100 shown in FIG. 5 when the first swing arm 232 is in a folded position.

In the hinge mechanism 23, structural strength of a connecting portion between the first swing arm 232 and the hinge base 231 affects overall structural strength of the device. However, as the device becomes thinner, a thickness H of the hinge base 231 gradually decreases, and a thickness d1 of the arc-shaped sliding groove C in the hinge base 231 for mating with the first swing arm 232 also decreases accordingly. Consequently, a thickness d2 of the rotation end 2322 of the first swing arm 232 also becomes increasingly thin, resulting in a progressive reduction in the structural strength of the connecting portion, and a higher risk of fracture. Therefore, the electronic device 100 cannot ensure the structural strength of the connecting portion between the first swing arm 232 and the hinge base 231 in the hinge mechanism 23 while satisfying a demand for overall thinning of the device.

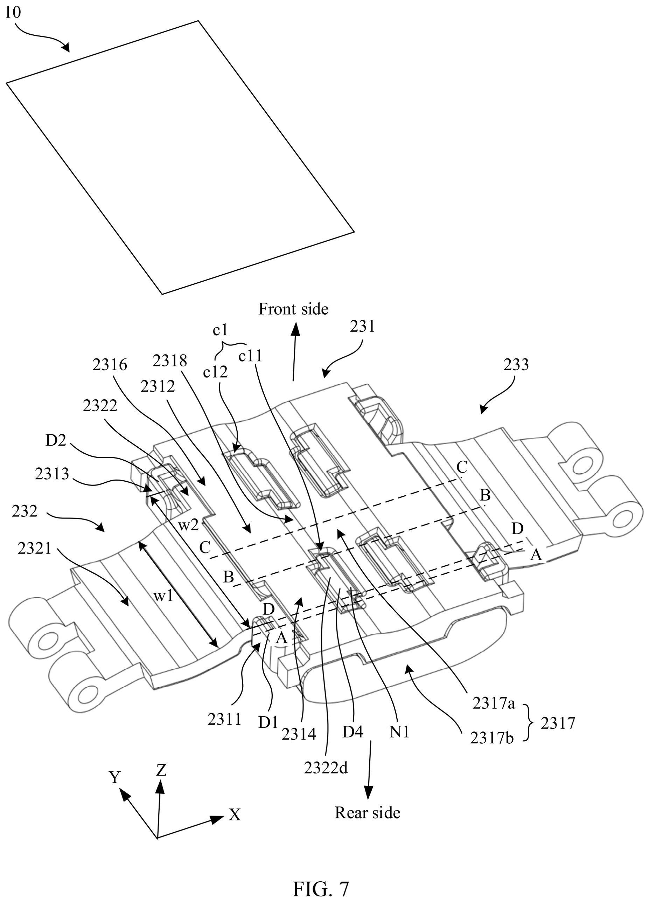

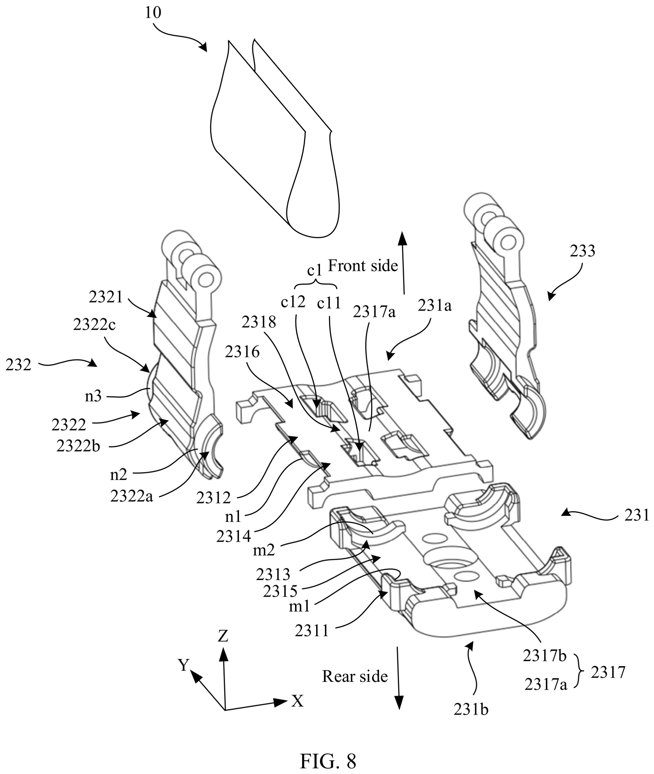

To resolve the foregoing problem, referring to FIG. 7 and FIG. 8, FIG. 7 is a three-dimensional view of a hinge mechanism 23 according to some embodiments of this application, and FIG. 8 is a schematic diagram of an exploded structure of the hinge mechanism 23 shown in FIG. 7. The hinge mechanism 23 includes the hinge base 231, the first swing arm 232, and the second swing arm 233.

It should be noted that, in the following embodiments, in the description of the hinge mechanism 23 and the components in the hinge mechanism 23, "front side" refers to the side of the described object facing the foldable screen 10, "front side surface" refers to the surface of the described object facing the foldable screen 10, "rear side" refers to the surface of the described object facing away from the foldable screen 10, and "rear side surface" refers to the surface of the described object facing away from the foldable screen 10, which are not described one by one in the following.

In addition, it should be noted that, FIG. 7 and FIG. 8 provide some components included in the hinge mechanism 23. Actual shapes, sizes, positions, and constructions of the components are not limited by FIG. 7 and FIG. 8. In addition to the components shown in FIG. 7 and FIG. 8, the hinge mechanism 23 may further include other components, such as a hinge cover, a secondary swing arm, a synchronization mechanism, a damping mechanism. This is not specifically limited in this application.

Based on the above, referring particularly to FIG. 8, the hinge base 231 provides the position reference datum in the hinge mechanism 23. The material of the hinge base 231 may be selected from metal materials such as stainless steel, aluminum alloy, or magnesium-aluminum alloy, or from non-metal materials such as polycarbonate (polycarbonate, PC), PC+glass fiber, or ABS plastic (acrylonitrile butadiene styrene plastic) plastic. The hinge base 231 includes a first mating portion 2311, a second mating portion 2312, and a third mating portion 2313 sequentially disposed along an extension direction of a hinge axis.

A front side surface of the first mating portion 2311 is a first concave arc surface m1, and the first concave arc surface m1 is recessed rearward. A rear side surface of the second mating portion 2312 is a first convex arc surface n1, and the first convex arc surface n1 protrudes rearward. A front side surface of the third mating portion 2313 is a second concave arc surface m2, and the second concave arc surface m2 is recessed rearward.

A center line of the first concave arc surface m1, a center line of the first convex arc surface n1, and a center line of the second concave arc surface m2 are collinear with the hinge axis. A radius of the first concave arc surface m1 and a radius of the second concave arc surface m2 may be greater than a radius of the first convex arc surface n1, less than a radius of the first convex arc surface n1, or equal to a radius of the first convex arc surface n1. This application is exemplarily described based on the radius of the first concave arc surface m1 and the radius of the second concave arc surface m2 being greater than the radius of the first convex arc surface n1. This cannot be considered as a special limitation on this application.

Based on the above, still referring to FIG. 8, the first swing arm 232 includes the rotation end 2322, where the rotation end 2322 includes a fourth mating portion 2322a, a fifth mating portion 2322b, and a sixth mating portion 2322c.

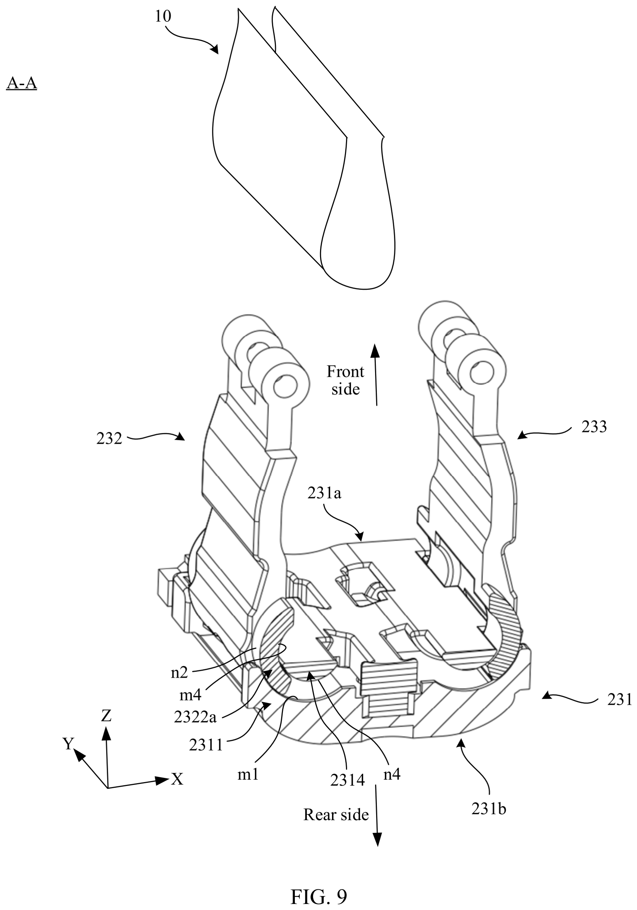

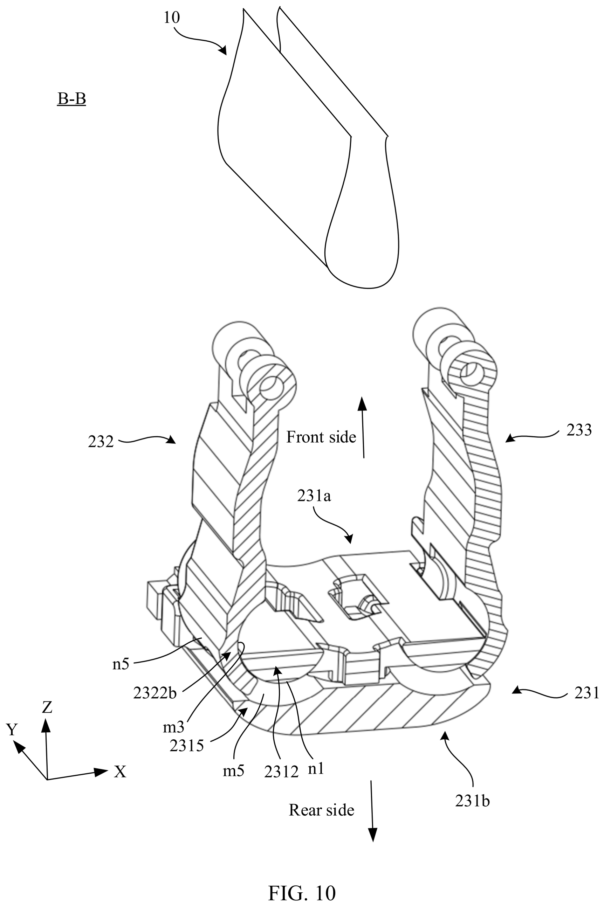

Referring to FIG. 9, FIG. 9 is a three-dimensional cross-sectional view of the hinge mechanism 23 shown in FIG. 7 along line A-A when the first swing arm 232 is in the folded position. The fourth mating portion 2322a is located on a front side of the first mating portion 2311. Referring to FIG. 10, FIG. 10 is a three-dimensional cross-sectional view of the hinge mechanism 23 shown in FIG. 7 along line B-B when the first swing arm 232 is in the folded position. The fifth mating portion 2322b is located on a rear side of the second mating portion 2312. The sixth mating portion 2322c is located on a front side of the third mating portion 2313.

Based on this, the fourth mating portion 2322a, the fifth mating portion 2322b, and the sixth mating portion 2322c are slidable respectively along the first concave arc surface m1, the first convex arc surface n1, and the second concave arc surface m2, so that the first swing arm 232 is rotatable relative to the hinge base 231 around the hinge between the unfolded position and the folded position.

In this way, the first concave arc surface m1, the first convex arc surface n1, and the second concave arc surface m2 form a virtual sliding groove, the first convex arc surface n1 forms an upper arc surface of the virtual sliding groove, the first concave arc surface m1 and the second concave arc surface m2 form a lower arc surface of the virtual sliding groove, and the rotation end 2322 is disposed within the virtual sliding groove, and is slidable along the virtual sliding groove relative to the hinge base 231, to implement rotation between the unfolded position and the folded position.

Based on this, the first mating portion 2311, the second mating portion 2312, and the third mating portion 2313 are sequentially disposed along the extension direction of the hinge axis, and the first concave arc surface m1, the first convex arc surface n1, and the second concave arc surface m2 are also staggered along the extension direction of the hinge axis. Therefore, the fourth mating portion 2322a is not limited by the upper arc surface, allowing for a larger thickness. The fifth mating portion 2322b is not limited by the lower arc surface, allowing for a larger thickness. The sixth mating portion 2322c is not limited by the upper arc surface, allowing for a larger thickness. Therefore, a thickness of the rotation end 2322 can be increased, thereby improving structural strength of the rotation end 2322, ensuring connection strength between the rotation end 2322 and the hinge base 231, and preventing fracture.

In addition, a spacing between the first convex arc surface n1 and the first concave arc surface m1 in a radial direction of the first concave arc surface m1, and a spacing between the first convex arc surface n1 and the second concave arc surface m2 in a radial direction of the second concave arc surface m2 can be designed to be smaller, so that a height of the hinge base 231 can be reduced, thereby facilitating thinning of the electronic device 100.

Moreover, contact surfaces between the rotation end 2322 and the hinge base 231 are staggered along the extension direction of the hinge axis. On the premise that dimensions of the hinge base 231 along the extension direction of the hinge axis are fixed, areas of the contact surfaces between the rotation end 2322 and the hinge base 231 are smaller, resulting in lower friction, which can prevent jamming, thereby improving rotational flexibility.

In the foregoing embodiments, the fourth mating portion 2322a, the fifth mating portion 2322b, and the sixth mating portion 2322c may be in a shape of a slider, a convex ball, a cylinder, a drum, a roller, or the like. This is not specifically limited in this application.

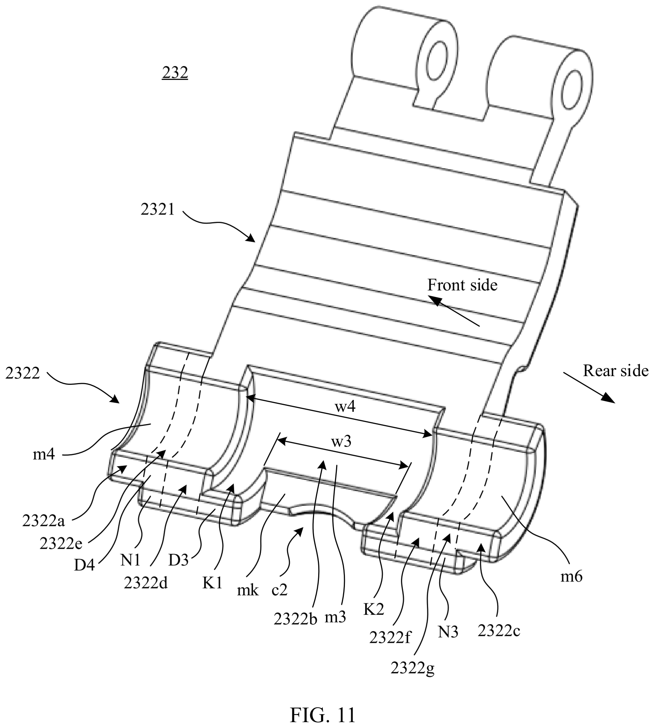

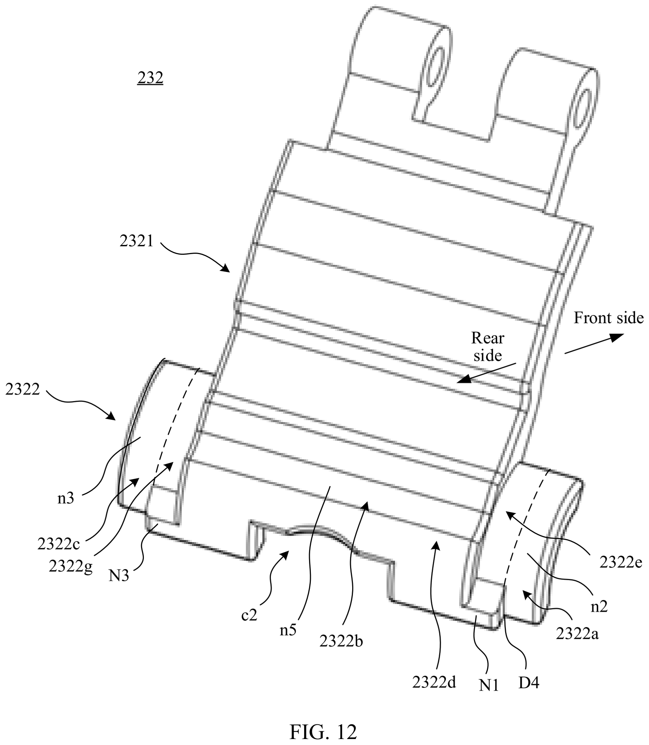

In some embodiments, referring to FIG. 11 and FIG. 12, FIG. 11 is a three-dimensional view of the first swing arm 232 in the hinge mechanism 23 shown in FIG. 8 from an angle, and FIG. 12 is a three-dimensional view of the first swing arm 232 shown in FIG. 11 from another angle.

A rear side surface of the fourth mating portion 2322a is a second convex arc surface n2, the second convex arc surface n2 protrudes rearward, and the second convex arc surface n2 is in mating contact with the first concave arc surface m1.

Similarly, a front side surface of the fifth mating portion 2322b is a third concave arc surface m3, the third concave arc surface m3 is recessed rearward, and the third concave arc surface m3 is in mating contact with the first convex arc surface n1.

A rear side surface of the sixth mating portion 2322c is a third convex arc surface n3, the third convex arc surface n3 protrudes rearward, and the third convex arc surface n3 is in mating contact with the second concave arc surface m2.

In this way, when the first swing arm 232 rotates relative to the hinge base 231 between the unfolded position and the folded position, the second convex arc surface n2 slides relative to the first concave arc surface m1, the third concave arc surface m3 slides relative to the first convex arc surface n1, and the third convex arc surface n3 slides relative to the second concave arc surface m2. In this way, during sliding, maintaining contact between surfaces can reduce stress concentration and prevent jamming or the like.

In some embodiments, referring to FIG. 8, FIG. 10, and FIG. 11 together, the radius of the first concave arc surface m1 may be equal to the radius of the second concave arc surface m2, and correspondingly, a radius of the second convex arc surface n2 may be equal to a radius of the third convex arc surface n3. In this way, the hinge base 231 has a simple profile, which facilitates machining.

Certainly, in some other embodiments, the radius of the first concave arc surface m1 and the radius of the second concave arc surface m2 may also be different, and correspondingly, the radius of the second convex arc surface n2 and the radius of the third convex arc surface n3 may also be different. This is not specifically limited in this application.

In the foregoing embodiments, the hinge base 231 may be an integral structural member or may be assembled from a plurality of components.

In some embodiments, referring particularly to FIG. 8, the hinge base 231 may include an upper base 231a and a lower base 231b. The lower base 231b is located on a rear side of the upper base 231a, and the lower base 231b is fixedly connected to the upper base 231a. Specifically, a manner in which the lower base 231b is fixedly connected to the upper base 231a may be a non-detachable connection manner such as welding or adhesive bonding, or may be a detachable connection manner such as threaded connection or snap-fit connection. This application is exemplarily described based on the lower base 231b being fixedly connected to the upper base 231a in a detachable connection manner. Specifically, referring to FIG. 8, the lower base 231b may be connected to the upper base 231a by using a screw. In this way, it facilitates disassembly for maintenance, replacement, or dust cleaning.

Based on the above, still referring to FIG. 8, the first mating portion 2311 and the third mating portion 2313 may form part of the lower base 231b, and the second mating portion 2312 may constitute part of the upper base 231a. In this way, the lower base 231b and the upper base 231a can clamp the rotation end 2322 respectively from a front side and a rear side, so that the fourth mating portion 2322a is located on the front side of the first mating portion 2311, the fifth mating portion 2322b is located on the rear side of the second mating portion 2312, and the sixth mating portion 2322c is located on the front side of the third mating portion 2313. Therefore, assembly difficulty between the hinge base 231 and the rotation end 2322 can be reduced, thereby improving assembly efficiency.

It should be noted that, in addition to including the upper base 231a and the lower base 231b, the hinge base 231 may further have another composition and assembly manner. This is not specifically limited in this application.

In some embodiments, referring to FIG. 8, the hinge base 231 may further include a first limiting portion 2314, a second limiting portion 2315, and a third limiting portion 2316.

At least part of the first limiting portion 2314 is disposed on a front side of the fourth mating portion 2322a. Specifically, the first limiting portion 2314 may be entirely disposed on the front side of the fourth mating portion 2322a, or the first limiting portion 2314 may be partially disposed on the front side of the fourth mating portion 2322a. This embodiment is exemplarily described based on the first limiting portion 2314 being partially disposed on the front side of the fourth mating portion 2322a. This cannot be considered as a special limitation on this application.

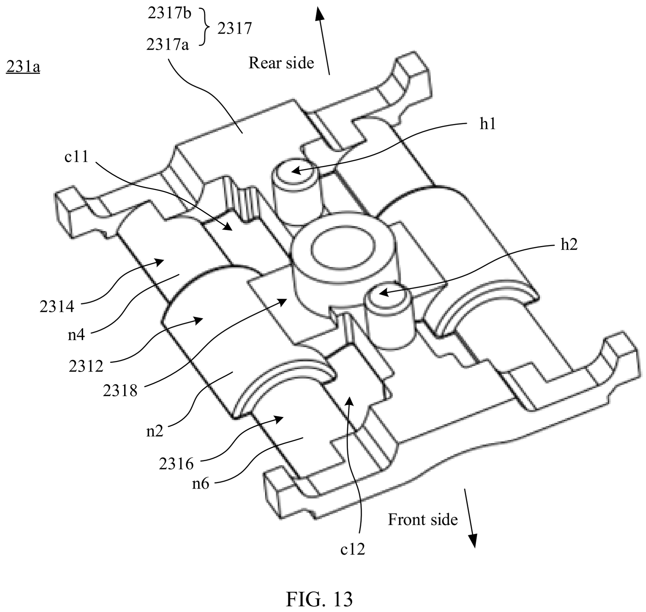

Referring to FIG. 13, FIG. 13 is a bottom view of the upper base 231a in the hinge mechanism shown in FIG. 8, and a rear side surface of the first limiting portion 2314 is a fourth convex arc surface n4. Referring back to FIG. 11, a front side surface of the fourth mating portion 2322a is a fourth concave arc surface m4.

Referring back to FIG. 9, both a center line of the fourth convex arc surface n4 and a center line of the fourth concave arc surface m4 are collinear with the hinge axis, and the fourth convex arc surface n4 and the fourth concave arc surface m4 face each other.

In this way, the fourth mating portion 2322a may be spaced apart from the foldable screen 10 by using the first limiting portion 2314, preventing friction, wear, and noise generated by a relative motion between the fourth mating portion 2322a and the foldable screen 10 during sliding along the first concave arc surface m1.

In addition, because the rear side surface of the first limiting portion 2314 is the fourth convex arc surface n4, the front side surface of the fourth mating portion 2322a is the fourth concave arc surface m4, and both the center line of the fourth convex arc surface n4 and the center line of the fourth concave arc surface m4 are collinear with the hinge axis, interference with the sliding motion of the first limiting portion 2314 and the fourth mating portion 2322a along the first concave arc surface m1 can be prevented, and structural compactness can be improved.

Moreover, the first limiting portion 2314 may limit the fourth mating portion 2322a, preventing one end of the fourth mating portion 2322a along the extension direction of the hinge axis from tilting relative to the other end during sliding along the first concave arc surface m1. In addition, structural strength of the hinge base 231 can be improved by using the first limiting portion 2314.

In the foregoing embodiments, the fourth convex arc surface n4 and the fourth concave arc surface m4 may be spaced apart, or may be in direct contact. This application is exemplarily described based on the fourth convex arc surface n4 and the fourth concave arc surface m4 being spaced apart. A width of a gap between the fourth convex arc surface n4 and the fourth concave arc surface m4 may be less than or equal to 2 mm. Specifically, the width of the gap may be 0.1 mm, 0.5 mm, 1 mm, 1.5 mm, or 2 mm. In this way, the fourth convex arc surface n4 is not in contact with the fourth concave arc surface m4, so that a contact area between the fourth mating portion 2322a and the hinge base 231 can be reduced, sliding friction is reduced, wear is reduced, the service life is prolonged, the likelihood of jamming is lowered, and the folding feel is improved.

In addition, referring to FIG. 13, the first limiting portion 2314 may be disposed on the upper base 231a. The structure is simple, and assembly is convenient.

Referring back to FIG. 8, at least part of the second limiting portion 2315 is disposed on a rear side of the fifth mating portion 2322b. Specifically, the second limiting portion 2315 may be entirely disposed on the rear side of the fifth mating portion 2322b, or the second limiting portion 2315 may be partially disposed on the rear side of the fifth mating portion 2322b. This embodiment is exemplarily described based on the second limiting portion 2315 being partially disposed on the rear side of the fifth mating portion 2322b. This cannot be considered as a special limitation on this application.

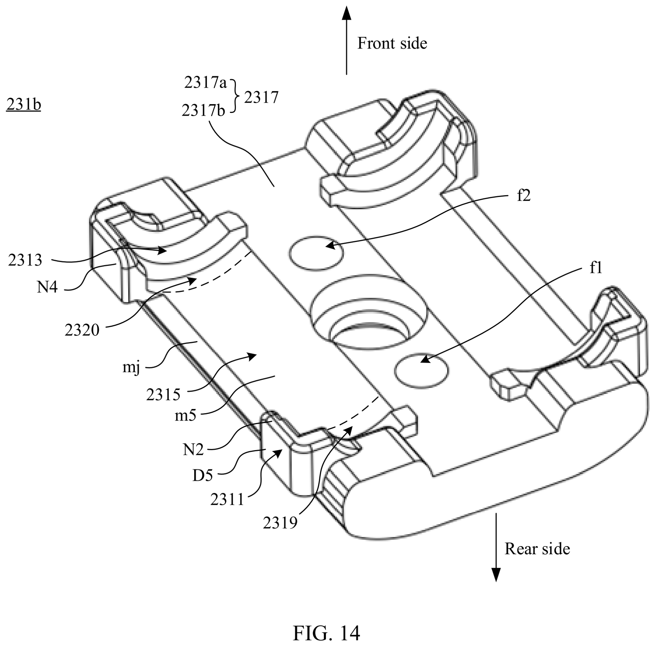

Referring to FIG. 12, a rear side surface of the fifth mating portion 2322b is approximately a fifth convex arc surface n5. Referring to FIG. 14, FIG. 14 is a three-dimensional view of the lower base 231b in the hinge mechanism 23 shown in FIG. 8. A front side surface of the second limiting portion 2315 is the fifth concave arc surface m5.

Referring to FIG. 10, both a center line of the fifth convex arc surface n5 and a center line of the fifth concave arc surface m5 are collinear with the hinge axis, and the fifth convex arc surface n5 and the fifth concave arc surface m5 face each other.

In this way, the fifth mating portion 2322b may be shielded and protected by using the second limiting portion 2315, preventing the fifth mating portion 2322b from being exposed on the rear side of the hinge base 231, thereby ensuring overall aesthetic appearance of the device. This eliminates the need for a separate hinge cover on the rear side of the hinge base 231. Therefore, structural complexity can be simplified, and a thickness of the electronic device 100 can be reduced, thereby facilitating thinning.

In addition, because the rear side surface of the fifth mating portion 2322b is approximately the fifth convex arc surface n5, the front side surface of the second limiting portion 2315 is the fifth concave arc surface m5, and both the center line of the fifth convex arc surface n5 and the center line of the fifth concave arc surface m5 are collinear with the hinge axis, interference with the sliding motion of the fifth mating portion 2322b and the second limiting portion 2315 along the first convex arc surface n1 can be prevented, and structural compactness can be improved..

In addition, the structural strength of the hinge base 231 can be improved by using the second limiting portion 2315.

In the foregoing embodiments, the fifth convex arc surface n5 and the fifth concave arc surface m5 may be spaced apart, or may be in direct contact. This application is exemplarily described based on the fifth convex arc surface n5 and the fifth concave arc surface m5 being spaced apart. A width of a gap between the fifth convex arc surface n5 and the fifth concave arc surface m5 may be less than or equal to 2 mm. Specifically, the width of the gap may be 0.1 mm, 0.5 mm, 1 mm, 1.5 mm, or 2 mm. In this way, the fifth convex arc surface n5 is not in contact with the fifth concave arc surface m5, so that a contact area between the fifth mating portion 2322b and the hinge base 231 can be reduced, sliding friction is reduced, wear is reduced, the service life is prolonged, the likelihood of jamming is lowered, and the folding feel is improved.

In addition, referring to FIG. 14, the second limiting portion 2315 may be disposed on the lower base 231b. The structure is simple, and assembly is convenient.

Similarly, referring back to FIG. 8, at least part of the third limiting portion 2316 is disposed on a front side of the sixth mating portion 2322c. Specifically, the third limiting portion 2316 may be entirely disposed on the front side of the sixth mating portion 2322c, or the third limiting portion 2316 may be partially disposed on the front side of the sixth mating portion 2322c. This embodiment is exemplarily described based on the third limiting portion 2316 being partially disposed on the front side of the sixth mating portion 2322c. This cannot be considered as a special limitation on this application.

Referring to FIG. 13, a rear side surface of the third limiting portion 2316 is a sixth convex arc surface n6. Referring to FIG. 11, a front side surface of the sixth mating portion 2322c is a sixth concave arc surface m6.

When the upper base 231a shown in FIG. 13 and the first swing arm 232 shown in FIG. 11 are applied to the assembly structure shown in FIG. 8, both a center line of the sixth convex arc surface n6 and a center line of the sixth concave arc surface m6 are collinear with the hinge axis, and the sixth convex arc surface n6 and the sixth concave arc surface m6 face each other.

In this way, the sixth mating portion 2322c may be spaced apart from the foldable screen 10 by using the third limiting portion 2316, preventing friction, wear, and noise generated by a relative motion between the sixth mating portion 2322c and the foldable screen 10 during sliding along the second concave arc surface m2.

In addition, because the rear side surface of the third limiting portion 2316 is the sixth convex arc surface n6, the front side surface of the sixth mating portion 2322c is the sixth concave arc surface m6, and both the center line of the sixth convex arc surface n6 and the center line of the sixth concave arc surface m6 are collinear with the hinge axis, interference with the sliding motion of the sixth mating portion 2322c and the third limiting portion 2316 along the second concave arc surface m2 can be prevented, and structural compactness can be improved.

Moreover, the third limiting portion 2316 may limit the sixth mating portion 2322c, preventing one end of the sixth mating portion 2322c along the extension direction of the hinge axis from tilting relative to the other end during sliding along the second concave arc surface m2. In addition, the structural strength of the hinge base 231 can be improved by using the third limiting portion 2316.

In the foregoing embodiments, the sixth convex arc surface n6 and the sixth concave arc surface m6 may be spaced apart, or may be in direct contact. This application is exemplarily described based on the sixth convex arc surface n6 and the sixth concave arc surface m6 being spaced apart. A width of a gap between the sixth convex arc surface n6 and the sixth concave arc surface m6 may be less than or equal to 2 mm. Specifically, the width of the gap may be 0.1 mm, 0.5 mm, 1 mm, 1.5 mm, or 2 mm. In this way, the sixth convex arc surface n6 is not in contact with the sixth concave arc surface m6, so that a contact area between the sixth mating portion 2322c and the hinge base 231 can be reduced, sliding friction is reduced, wear is reduced, the service life is prolonged, the likelihood of jamming is lowered, and the folding feel is improved.

In addition, referring to FIG. 13, the third limiting portion 2316 may be disposed on the upper base 231a. The structure is simple, and assembly is convenient.

In some other embodiments, an opening may be formed in the hinge base 231 on a front side of the fourth limiting portion 2322a, on a rear side of the fifth limiting portion 2322b, and on a front side of the sixth limiting portion 2322c. This is not specifically limited in this application.

In some embodiments, referring back to FIG. 8, the hinge base 231 may further include a fixing portion 2317. Specifically, the fixing portion 2317 may include an upper fixing portion 2317a and a lower fixing portion 2317b. The upper fixing portion 2317a constitutes part of the upper base 231a, and the lower fixing portion 2317b constitutes part of the lower base 231b. A fixed connection structure between the upper base 231a and the lower base 231b is disposed between the upper fixing portion 2317a and the lower fixing portion 2317b.

Based on the above, the first mating portion 2311, the second mating portion 2312, the third mating portion 2313, the first limiting portion 2314, the second limiting portion 2315, and the third limiting portion 2316 are disposed on the same side of the fixing portion 2317. Moreover, the first limiting portion 2314, the second mating portion 2312, and the third limiting portion 2316 are connected to the upper fixing portion 2317a, and are located on the same side of the upper fixing portion 2317a; and the first mating portion 2311, the second limiting portion 2315, and the third mating portion 2313 are connected to the lower fixing portion 2317b, and are located on the same side of the lower fixing portion 2317b.

Based on this, still referring to FIG. 8, the first swing arm 232 further includes a swing arm body 2321, and the rotation end 2322 is disposed on one end of the swing arm body 2321. When the first swing arm 232 is in the unfolded position, referring to FIG. 7, the swing arm body 2321 and the fixing portion 2317 are respectively located on opposite sides of the rotation end 2322. The structure is simple and the layout is proper.

Based on the foregoing embodiments, still referring to FIG. 7, a width w1 of the swing arm body 2321 along the extension direction of the hinge axis is less than a spacing w2 between the first mating portion 2311 and the third mating portion 2313 along the extension direction of the hinge axis.

Based on this, an end portion of the first mating portion 2311 away from the fixing portion 2317 is a first end portion D1, and an end portion of the third mating portion 2313 away from the fixing portion 2317 is a second end portion D2. When the first swing arm 232 is in the unfolded position, referring to FIG. 7, the swing arm body 2321 is located between the first end portion D1 and the second end portion D2.

In this way, thickness overlap between the swing arm body 2321 and the first mating portion 2311 as well as the third mating portion 2313 when the first swing arm 232 is in the unfolded position can be prevented, thereby helping reduce the thickness of the hinge base 231. In addition, heights set for the first end portion D1 and the second end portion D2 can be increased, and when the first swing arm 232 is in the folded position, referring to FIG. 9, an overlap width between the fourth mating portion 2322a and the first concave arc surface m1 and an overlap width between the sixth mating portion 2322c and the second concave arc surface m2 can be increased, preventing jamming. Moreover, because the swing arm body 2321 is located between the first end portion D1 and the second end portion D2, that is, the first end portion D1 and the second end portion D2 are respectively located on opposite sides of the swing arm body 2321. In this way, the first end portion D1 and the second end portion D2 can be connected to another part of the hinge base 231, preventing local protrusions. Therefore, when the first swing arm 232 is in the unfolded position, flatness of the front side surface of the hinge mechanism 23 can be improved, and reliability of the hinge mechanism 23 during a ball drop impact test and a pointed impact test can be improved.

In some embodiments, referring to FIG. 7 and FIG. 8, the hinge base 231 is provided with at least one clearance hole c1. "At least one" indicates one or more than one. The at least one clearance hole c1 penetrates through a front side surface of the hinge base 231. In some embodiments, referring particularly to FIG. 8, the at least one clearance hole c is provided on the upper base 231a.

Based on this, when the first swing arm 232 is in the unfolded position, referring to FIG. 7 and FIG. 8, an end portion of the fourth mating portion 2322a away from the swing arm body 2321, an end portion of the fifth mating portion 2322b away from the swing arm body 2321, and an end portion of the sixth mating portion 2322c away from the swing arm body 2321 are accommodated within the at least one clearance hole c1.

In this way, by using the at least one clearance hole c1, a clearance can be provided for the end portion of the fourth mating portion 2322a away from the swing arm body 2321, the end portion of the fifth mating portion 2322b away from the swing arm body 2321, and the end portion of the sixth mating portion 2322c away from the swing arm body 2321, so that thickness overlap can be avoided, and the thickness of the hinge base 231 can be reduced, thereby facilitating thinning of the electronic device 100.

In some embodiments, still referring to FIG. 7 and FIG. 8, the hinge base 231 further includes a first connecting portion 2318, and the first connecting portion 2318 is connected between the second mating portion 2312 and the fixing portion 2317. Specifically, the first connecting portion 2318 may be connected between the second mating portion 2312 and the upper fixing portion 2317a.

Based on the above, referring to FIG. 11, an end portion of the fifth mating portion 2322b away from the swing arm body 2321 is a third end portion D3, and the third end portion D3 is provided with a clearance notch c2.

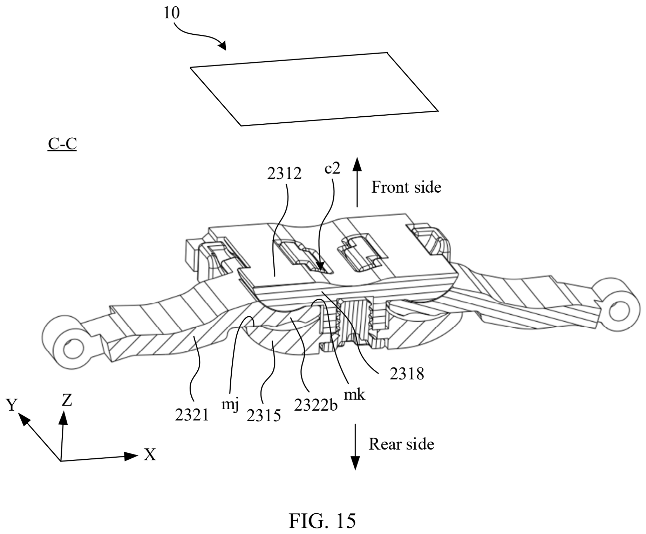

When the first swing arm 232 is in the unfolded position, referring to FIG. 15, FIG. 15 is a three-dimensional cross-sectional view of the hinge mechanism 23 shown in FIG. 7 along line C-C, and the first connecting portion 2318 is accommodated within the clearance notch c2.

In this way, the second mating portion 2312 is fixed to the fixing portion 2317 by using the first connecting portion 2318, so that the second mating portion 2312 can be prevented from being suspended, thereby improving structural strength.

Based on the foregoing embodiments, referring back to FIG. 11, an inner wall surface of the clearance notch c2 away from the third end portion D3 is a first stop surface mk. When the first swing arm 232 is in the unfolded position, still referring to FIG. 15, the first stop surface mk is in contact with a rear side surface of the first connecting portion 2318. In this way, with the mating between the first stop surface mk and the rear side surface of the first connecting portion 2318, the first swing arm 232 can be stopped.

In some embodiments, referring back to FIG. 14, an end surface of the second limiting portion 2315 away from the fixing portion 2317 is a second stop surface mj. When the first swing arm 232 is in the unfolded position, still referring to FIG. 15, the second stop surface mj is in contact with the rear side surface of the swing arm body 2321. In this way, the mating between the second stop surface mj and the rear side surface of the swing arm body 2321 can further stop the first swing arm 232.

In other embodiments, the second mating portion 2312 and the fixing portion 2317 may alternatively be spaced apart, and a gap between the second mating portion 2312 and the fixing portion 2317 forms part of the at least one clearance hole c1.

The following embodiments are further limited based on the first connecting portion 2318 being connected between the second mating portion 2312 and the fixing portion 2317. This cannot be considered as a special limitation on the specific structure of the hinge mechanism 23.

Referring back to FIG. 7 and FIG. 8, the at least one clearance hole c1 includes a first clearance hole c11 and a second clearance hole c12 that are spaced apart. An arrangement direction of the first clearance hole c11 and the second clearance hole c12 is parallel to the extension direction of the hinge axis, and the first clearance hole c11 and the second clearance hole c12 are respectively located on opposite sides of the first connecting portion 2318.

In addition, referring to FIG. 7, the first clearance hole c11 is located between the first limiting portion 2314 and the upper fixing portion 2317a, and the second clearance hole c12 is located between the third limiting portion 2316 and the upper fixing portion 2317a.

Based on the above, when the first swing arm 232 is in the unfolded position, referring to FIG. 7, the end portion of the fourth mating portion 2322a away from the swing arm body 2321 is accommodated within the first clearance hole c11, and the end portion of the sixth mating portion 2322c away from the swing arm body 2321 is accommodated within the second clearance hole c12.

The layout is proper, and the structure is simple.

Based on the foregoing embodiments, referring to FIG. 11, a width w3 of the clearance notch c2 along the extension direction of the hinge axis is less than a width w4 of the fifth mating portion 2322b along the extension direction of the hinge axis.

Based on this, still referring to FIG. 11, part of the fifth mating portion between the fourth mating portion 2322a and the clearance notch c2 is defined as a first sub-portion K1, and part of the fifth mating portion between the sixth mating portion 2322c and the clearance notch c2 is defined as a second sub-portion K2.

When the first swing arm 232 is in the unfolded position, referring back to FIG. 7, an end portion of the first sub-portion K1 away from the swing arm body 2321 is accommodated within the first clearance hole c11, and an end portion of the second sub-portion K2 away from the swing arm body 2321 is accommodated within the second clearance hole c12.

In this way, a contact area between the fifth mating portion 2322b and the first convex arc surface n1 can be increased by using the first sub-portion K1 and the second sub-portion K2, to avoid stress concentration. In addition, thickness overlap between the base 231 and the first sub-portion K1 as well as the second sub-portion K2 can be avoided by using the first clearance hole c11 and the second clearance hole c12, so that the thickness of the base 231 can be reduced, thereby facilitating overall thinning of the device.

In some embodiments, referring to FIG. 11, the rotation end 2322 of the first swing arm 232 further includes a second connecting portion 2322d, and the second connecting portion 2322d is disposed between the fourth mating portion 2322a and the fifth mating portion 2322b.

In this way, a distance between the fourth mating portion 2322a and the fifth mating portion 2322b in the extension direction of the hinge axis can be increased by using the second connecting portion 2322d, thereby improving the structural strength of the rotation end 2322.

Based on the above, referring back to FIG. 8, another part of the first limiting portion 2314 is located on a front side of the second connecting portion 2322d.

Based on this, still referring to FIG. 11, a front side surface of the second connecting portion 2322d is a concave arc surface, the concave arc surface is disposed coplanar with the fourth concave arc surface m4, and the concave arc surface and the fourth convex arc surface n4 of the first limiting portion 2314 face each other.

In this way, the second connecting portion 2322d may further be spaced apart from the foldable screen 10 by using the first limiting portion 2314, preventing friction, wear, and noise generated by a relative motion between the second connecting portion 2322d and the foldable screen 10 during the movement of the fourth mating portion 2322a and the fifth mating portion 2322b.

In some embodiments, referring to FIG. 12, a rear side surface of the second connecting portion 2322d is disposed coplanar with the fifth convex arc surface n5. In this way, the second connecting portion 2322d has a large thickness, which can improve the structural strength of the rotation end 2322. In addition, the first swing arm 232 has a simple profile, which can reduce machining difficulty and cost.

In some embodiments, referring to FIG. 8, another part of the second limiting portion 2315 is further located on a rear side of the second connecting portion 2322d. In this way, the second connecting portion 2322d may further be shielded and protected by using the second limiting portion 2315, preventing the second connecting portion 2322d from being exposed on the rear side of the hinge base 231, thereby ensuring overall aesthetic appearance of the device.

In some embodiments, referring particularly to FIG. 7, an end portion of the second connecting portion 2322d away from the swing arm body 2321 is accommodated within the first clearance hole c11. In this way, avoidance may be formed on the end portion of the second connecting portion 2322d away from the swing arm body 2321 by using the first clearance hole c11, so that thickness overlap can be avoided, and the thickness of the hinge base 231 can be reduced.

In some other embodiments, the hinge base 231 may further form an opening on the front side of the second connecting portion 2322d. This is not specifically limited in this application.

In some embodiments, still referring to FIG. 11, the rotation end 2322 further includes a first support portion 2322e, and the first support portion 2322e is disposed between the fourth mating portion 2322a and the second connecting portion 2322d.

Based on this, referring to FIG. 12, an end portion of the first support portion 2322e away from the swing arm body 2321 is defined as a first support end D4, and a rear side surface of the first support end D4 is provided with a first stop protrusion N1.

Correspondingly, referring to FIG. 14, the hinge base 231 further includes a second support portion 2319, the second support portion 2319 is located on a rear side of the first support portion 2322e shown in FIG. 11, and the second support portion 2319 is connected between the first mating portion 2311 and the third mating portion 2313. Specifically, the second support portion 2319 may be connected between the first mating portion 2311 and the second limiting portion 2315. An end portion of the second support portion 2319 away from the fixing portion 2317 is defined as a second support end D5, and a front side surface of the second support end D5 is provided with a second stop protrusion N2.

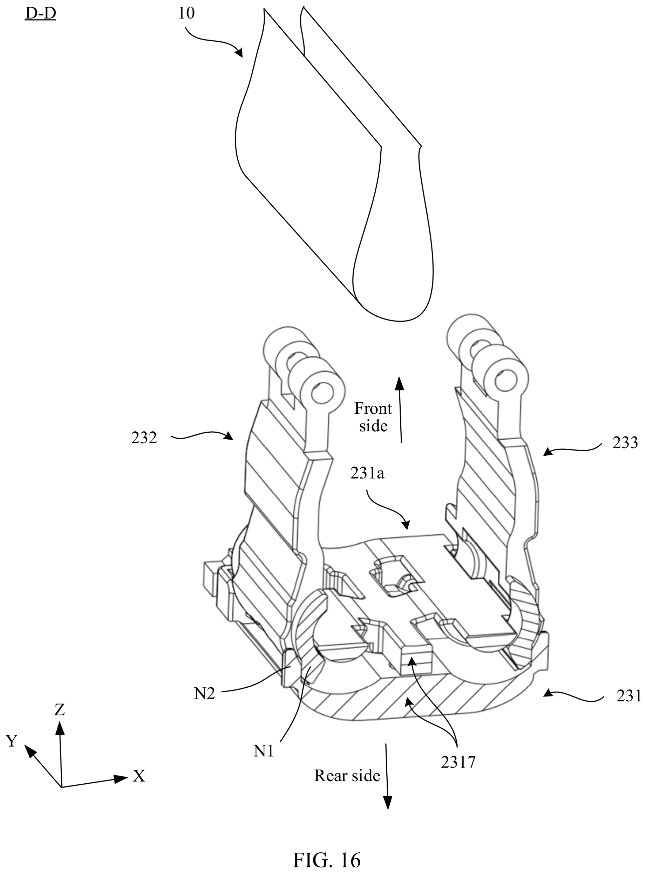

When the first swing arm 232 is in the folded position, referring to FIG. 16, FIG. 16 is a three-dimensional cross-sectional view of the hinge mechanism 23 shown in FIG. 7 along line D-D when the first swing arm 232 is in the folded position, the first stop protrusion N1 is located on a side of the second stop protrusion N2 facing the fixing portion 2317, and is in contact with the second stop protrusion N2.

In this way, the first swing arm 232 can be limited when in the folded position, preventing the first swing arm 232 from detaching away from the hinge base 231, thereby ensuring connection stability.

In the foregoing embodiments, optionally, referring to FIG. 12, a rear side surface of the first support portion 2322e may be coplanar with a rear side surface (that is, the second convex arc surface n2) of the fourth mating portion 2322a. Referring to FIG. 14, a front side surface of the second support portion 2319 may be coplanar with a front side surface (that is, the fifth concave arc surface m5) of the second limiting portion 2315.

In this way, the first swing arm 232 and the hinge base 231 have simple profiles, which can reduce machining difficulty and cost.

In some embodiments, when the first swing arm 232 is in the unfolded position, referring back to FIG. 7, the first support end D4 and the first stop protrusion N1 may be accommodated within the first clearance hole c11. In this way, thickness overlap can be avoided, and the thickness of the hinge base 231 of the hinge can be reduced, thereby facilitating overall thinning of the device.

In some embodiments, referring to FIG. 11, the rotation end 2322 further includes a third connecting portion 2322f, and the third connecting portion 2322f is disposed between the fifth mating portion 2322b and the sixth mating portion 2322c. A structure of the third connecting portion 2322f may be the same as the structure of the second connecting portion 2322d. Details are not described herein again.

Still referring to FIG. 11, the rotation end 2322 further includes a third support portion 2322g, the third support portion 2322g is disposed between the third connecting portion 2322f and the sixth mating portion 2322c, and the third support portion 2322g is provided with a third stop protrusion N3. A structure of the third support portion 2322g may be the same as the structure of the first support portion 2322e, and a structure of the third stop protrusion N3 may be the same as the structure of the first stop protrusion N1. Details are not described herein again.

Based on the above, referring to FIG. 14, the hinge base 231 further includes a fourth support portion 2320, the fourth support portion 2320 is located on a rear side of the third support portion 2322g shown in FIG. 11 and FIG. 12, and the fourth support portion 2320 is connected between the third mating portion 2313 and the first mating portion 2311. Specifically, the fourth support portion 2320 is connected between the third mating portion 2313 and the second limiting portion 2315, and the fourth support portion 2320 is provided with a fourth position stop protrusion N4. A structure of the fourth support portion 2320 may be the same as the structure of the second support portion 2319, and a structure of the fourth stop protrusion N4 may be the same as the structure of the second stop protrusion N2. Details are not described herein again. The mating between the fourth stop protrusion N4 and the third stop protrusion N3 can further limit a position of the first swing arm 232 when in the folded position.

In some embodiments, referring to FIG. 13, the upper base 231a is provided with at least one limiting column. Optionally, the at least one limiting column includes a first limiting column h1 and a second limiting column h2. Correspondingly, referring to FIG. 14, the lower base 231b is provided with at least one limiting hole. Optionally, the at least one limiting hole includes a first limiting hole f1 and a second limiting hole f2. The first limiting hole f1 is configured to mate with the first limiting column h1, and the second limiting hole f2 is configured to mate with the second limiting column h2, to implement limiting, thereby ensuring positioning precision between the upper base 231a and the lower base 231b and preventing misalignment.

In some other embodiments, the first limiting column h1 and the second limiting column h2 may alternatively be provided on the lower base 231b, and the first limiting hole f1 and the second limiting hole f2 may be provided on the upper base 231a. This is not specifically limited in this application.

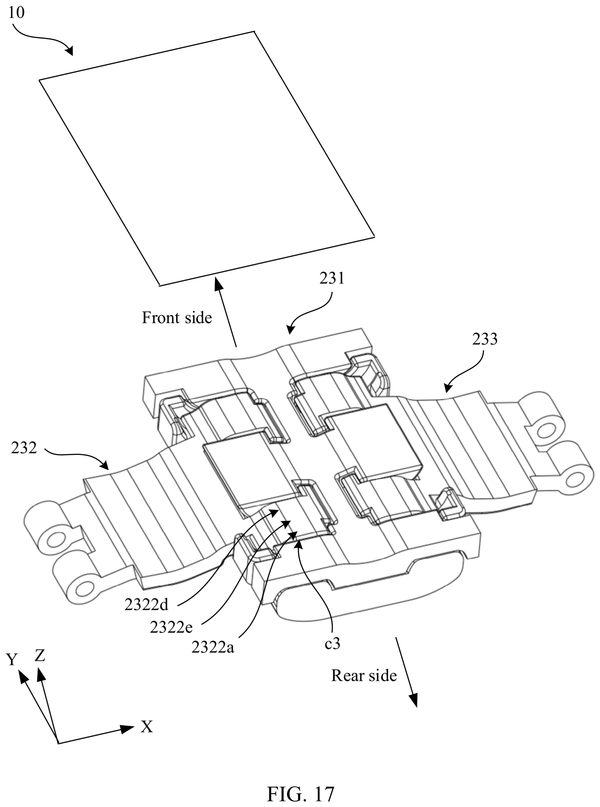

Referring to FIG. 17, FIG. 17 is a three-dimensional view of the hinge mechanism 23 according to some other embodiments of this application. In this embodiment, the hinge base 231 is provided with an accommodating groove c3, the accommodating groove c3 penetrates through the front side surface of the hinge base 231, and at least one of the fourth mating portion 2322a, the first support portion 2322e, or the second connecting portion 2322d is accommodated within the accommodating groove c3. In the embodiment shown in FIG. 17, the fourth mating portion 2322a, the first support portion 2322e, and the second connecting portion 2322d are all accommodated within the accommodating groove c3. The structure is simple, and the structural strength of the rotation end 2322 is large, so that connection strength between the first swing arm 232 and the hinge base 231 can be improved.

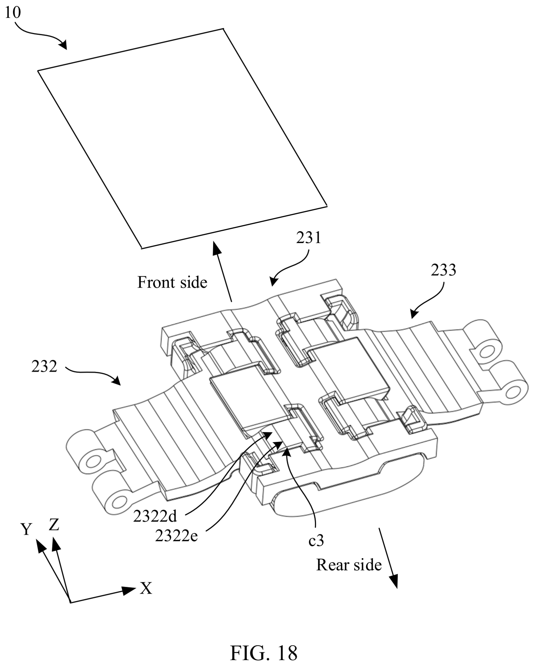

In another embodiment, referring to FIG. 18, FIG. 18 is a three-dimensional view of the hinge mechanism 23 according to some other embodiments of this application. In this embodiment, the first support portion 2322e and the second connecting portion 2322d are accommodated within the accommodating groove c3. The structure is simple, and can also increase the structural strength of the rotation end 2322, thereby improving the connection strength between the first swing arm 232 and the hinge base 231.

In the descriptions of this specification, the specified specific features, structures, materials, or characteristics may be combined in a proper manner in any one or more of the embodiments or examples.

In conclusion, it should be noted that, the foregoing embodiments are only used to describe the technical solutions of this application, but not intended to limit this application. Although this application has been described in detail with reference to the foregoing embodiments, it should be understood by a person skilled in the art that the technical solutions described in the foregoing embodiments can still be modified, or some or all of technical features can be replaced by equivalents. However, these modifications or substitutions do not cause the essence of corresponding technical solutions to depart from the spirit and scope of the technical solutions in the embodiments of this application.

## Claims

1. A hinge mechanism, comprising:
a hinge base, comprising a first mating portion, a second mating portion, and a third mating portion sequentially disposed along an extension direction of a hinge axis, wherein
a front side surface of the first mating portion is a first concave arc surface, a rear side surface of the second mating portion is a first convex arc surface, and a front side surface of the third mating portion is a second concave arc surface; and
a center line of the first concave arc surface, a center line of the first convex arc surface, and a center line of the second concave arc surface are collinear with the hinge axis; and
a first swing arm, comprising a rotation end, wherein the rotation end comprises a fourth mating portion, a fifth mating portion, and a sixth mating portion, wherein the fourth mating portion is located on a front side of the first mating portion, the fifth mating portion is located on a rear side of the second mating portion, and the sixth mating portion is located on a front side of the third mating portion, and
the fourth mating portion, the fifth mating portion, and the sixth mating portion are slidable respectively along the first concave arc surface, the first convex arc surface, and the second concave arc surface, so that the first swing arm is slidable relative to the hinge base around the hinge axis between an unfolded position and a folded position.

2. The hinge mechanism according to claim 1, wherein a rear side surface of the fourth mating portion is a second convex arc surface, and the second convex arc surface is in mating contact with the first concave arc surface;
a front side surface of the fifth mating portion is a third concave arc surface, and the third concave arc surface is in mating contact with the first convex arc surface; and
a rear side surface of the sixth mating portion is a third convex arc surface, and the third convex arc surface is in mating contact with the second concave arc surface.

3. The hinge mechanism according to claim 1 or 2, wherein a radius of the first concave arc surface is equal to a radius of the second concave arc surface.

4. The hinge mechanism according to any one of claims 1 to 3, wherein the hinge base further comprises a first limiting portion;
at least part of the first limiting portion is disposed on a front side of the fourth mating portion;
a rear side surface of the first limiting portion is a fourth convex arc surface, and a front side surface of the fourth mating portion is a fourth concave arc surface; and
a center line of the fourth convex arc surface and a center line of the fourth concave arc surface are collinear with the hinge axis, and the fourth convex arc surface and the fourth concave arc surface face each other.

5. The hinge mechanism according to claim 4, wherein the fourth convex arc surface and the fourth concave arc surface are spaced apart.

6. The hinge mechanism according to any one of claims 1 to 5, wherein the hinge base further comprises a second limiting portion;
at least part of the second limiting portion is disposed on a rear side of the fifth mating portion;
a front side surface of the second limiting portion is a fifth concave arc surface, and a rear side surface of the fifth mating portion is a fifth convex arc surface; and
a center line of the fifth concave arc surface and a center line of the fifth convex arc surface are collinear with the hinge axis, and the fifth concave arc surface and the fifth convex arc surface face each other.

7. The hinge mechanism according to claim 6, wherein the fifth concave arc surface and the fifth convex arc surface are spaced apart.

8. The hinge mechanism according to any one of claims 1 to 7, wherein the hinge base further comprises a fixing portion, and the first mating portion, the second mating portion, and the third mating portion are disposed on the same side of the fixing portion;
the first swing arm further comprises a swing arm body, and the rotation end is disposed on one end of the swing arm body; and
when the first swing arm is in the unfolded position, the swing arm body and the fixing portion are respectively located on opposite sides of the rotation end.

9. The hinge mechanism according to claim 8, wherein a width of the swing arm body along the extension direction of the hinge axis is less than a spacing between the first mating portion and the third mating portion along the extension direction of the hinge axis;
an end portion of the first mating portion away from the fixing portion is a first end portion, and an end portion of the third mating portion away from the fixing portion is a second end portion; and
when the first swing arm is in the unfolded position, the swing arm body is located between the first end portion and the second end portion.

10. The hinge mechanism according to claim 8 or 9, wherein the hinge base is provided with at least one clearance hole, and the at least one clearance hole penetrates through a front side surface of the hinge base; and
when the first swing arm is in the unfolded position, an end portion of the fourth mating portion away from the swing arm body, an end portion of the fifth mating portion away from the swing arm body, and an end portion of the sixth mating portion away from the swing arm body are accommodated within the at least one clearance hole.

11. The hinge mechanism according to claim 10, wherein the hinge base further comprises a first connecting portion, and the first connecting portion is connected between the second mating portion and the fixing portion;
the end portion of the fifth mating portion away from the swing arm body is a third end portion, and the third end portion is provided with a clearance notch; and
when the first swing arm is in the unfolded position, the first connecting portion is accommodated within the clearance notch.

12. The hinge mechanism according to claim 11, wherein an inner wall surface of the clearance notch away from the third end portion is a first inner wall surface; and
when the first swing arm is in the unfolded position, the first inner wall surface is in contact with a rear side surface of the first connecting portion.

13. The hinge mechanism according to claim 11 or 12, wherein the at least one clearance hole comprises a first clearance hole and a second clearance hole that are spaced apart;
an arrangement direction of the first clearance hole and the second clearance hole is parallel to the extension direction of the hinge axis, and the first clearance hole and the second clearance hole are respectively located on opposite sides of the first connecting portion; and
when the first swing arm is in the unfolded position, the end portion of the fourth mating portion away from the swing arm body is accommodated within the first clearance hole, and the end portion of the sixth mating portion away from the swing arm body is accommodated within the second clearance hole.

14. The hinge mechanism according to claim 13, wherein a width of the clearance notch along the extension direction of the hinge axis is less than a width of the fifth mating portion along the extension direction of the hinge axis;
part of the fifth mating portion between the fourth mating portion and the clearance notch is a first sub-portion, and part of the fifth mating portion between the sixth mating portion and the clearance notch is a second sub-portion; and
when the first swing arm is in the unfolded position, an end portion of the first sub-portion away from the swing arm body is accommodated within the first clearance hole, and an end portion of the second sub-portion away from the swing arm body is accommodated within the second clearance hole.

15. The hinge mechanism according to any one of claims 1 to 14, wherein the rotation end further comprises a second connecting portion, and the second connecting portion is disposed between the fourth mating portion and the fifth mating portion.

16. The hinge mechanism according to claim 15, wherein the rotation end further comprises a first support portion, the first support portion is disposed between the fourth mating portion and the second connecting portion, an end portion of the first support portion away from the swing arm body is a first support end, and a rear side surface of the first support end is provided with a first stop protrusion;
the hinge base further comprises a second support portion, the second support portion is located on a rear side of the first support portion, the second support portion is disposed between the first mating portion and the third mating portion, an end portion of the second support portion away from the fixing portion is a second support end, and a front side surface of the second support end is provided with a second stop protrusion; and
when the first swing arm is in the folded position, the first stop protrusion is located on a side of the second stop protrusion facing the fixing portion, and is in contact with the second stop protrusion.

17. The hinge mechanism according to claim 16, wherein the hinge base is provided with an accommodating groove, and the accommodating groove penetrates through the front side surface of the hinge base; and
at least one of the fourth mating portion, the first support portion, or the second connecting portion is accommodated within the accommodating groove.

18. The hinge mechanism according to any one of claims 1 to 17, wherein
the hinge base comprises an upper base and a lower base located on a rear side of the upper base, and the upper base is fixedly connected to the lower base; and
the second mating portion constitutes part of the upper base, and the first mating portion and the third mating portion constitute part of the lower base.

19. An electronic device, comprising:
a first structural member; and
the hinge mechanism according to any one of claims 1 to 18, wherein a first swing arm of the hinge mechanism is in transmission connection with the first structural member.

20. The electronic device according to claim 19, further comprising:
a foldable screen, wherein the foldable screen comprises a first display region and a second display region; and
the first structural member carries the first display region, the hinge mechanism carries the second display region, and the second display region is located on a front side of the hinge mechanism.
